# EUROPEAN PATENT APPLICATION

(11) **EP 2 229 032 A1**
(43) Date of publication of application: **15.09.2010**
(21) Application number: 10168479.3
(22) Date of filing: 04.10.2006
(51) Int. Cl.: H04W 72/12

(54) **Communicating control information for high speed downlink and uplink transmissions in a wireless communication system**

(30) Priority: 07.10.2005 US 725064 P
(62) Divisional of application: 06816232.0
(71) Applicant: INTERDIGITAL TECHNOLOGY CORPORATION, Wilmington, DE 19810 (US)
(72) Inventor: Chandra, Arty, Manhasset Hills, NY 11040 (US); Terry, Stephen E., Northport, NY 11768 (US)
(74) Representative: Johansson, Magnus

(57) **Abstract**

A method and system for providing control information for supporting high speed downlink and high speed uplink packet access are disclosed. A Node-B assigns at least one downlink control channel and at least one uplink control channel to a wireless transmit/receive unit (WTRU). The downlink control channel and the uplink control channel are provided to carry control information for both the downlink and the uplink. Conventional control channels for downlink and uplink are combined into a reduced set of control channels for uplink and downlink. The Node-B and the WTRU communicate control information via the downlink control channel and the uplink control channel. The WTRU receives downlink data and transmits uplink data, and the Node-B receives uplink data and transmits downlink data based on the control information transmitted via the downlink control channel and the uplink control channel.

## Description

FIELD OF INVENTION

The present invention is related to a wireless communication system. More particularly, the present invention is related to a method and system for providing control information for supporting high speed downlink and uplink.

BACKGROUND

The third generation partnership project (3GPP) releases 5 and 6 provide HSDPA and HSUPA for high speed transmissions in the downlink and uplink, respectively. For HSDPA and HSUPA operations, a Node-B dynamically allocates radio resources to a plurality of user equipments (UEs), and several physical channels are provided to the UEs.

There are two downlink physical channels and one uplink physical channel in HSDPA. The downlink physical channels include a high speed shared control channel (HS-SCCH) and a high speed physical downlink shared channel (HS-PDSCH). The uplink physical channel includes a high speed dedicated physical control channel (HS-PDCCH).

The HS-SCCH carriers downlink HSDPA control information. The downlink HSDPA control information includes a channelization code set, a modulation scheme, a transport block size, hybrid automatic repeat request (H-ARQ) process information, redundancy and constellation version, a new data indicator and a UE identity (ID). A UE is assigned with up to four (4) HS-SCCHs in a cell via radio resource control (RRC) signaling. The UE needs to monitor all of the allocated HS-SCCH(s) before receiving control information for HSDPA.

The HS-PDSCH carriers downlink HSDPA data packets. Based on the processing of the HS-PDSCH, (e.g., cyclic redundancy check (CRC) and H-ARQ processing), the UE sends a positive acknowledgement (ACK) or a negative acknowledgement (NACK) signal to the Node-B via the HS-DPCCH. The HS-DPCCH also carries a channel quality indicator (CQI).

There are three downlink physical channels and two uplink physical channels in HSUPA. The downlink physical channels include an enhanced dedicated channel (E-DCH) absolute grant channel (E-AGCH), an E-DCH relative grant channel (E-RGCH), and an E-DCH H-ARQ indicator channel (E-HICH). The uplink physical channels include an E-DCH dedicated physical data channel (E-DPDCH) and an E-DCH dedicated physical control channel (E-DPCCH)

The E-AGCH carries an uplink E-DCH absolute grant, (i.e., a maximum power ratio between the E-DPDCH and a dedicated physical control channel (DPCCH)). The channelization code for the E-AGCH is signaled separately to each UE. The E-RGCH carries an uplink E-DCH relative grant.
The E-HICH carries an E-DCH H-ARQ acknowledgement indicator, (i.e., ACK or NACK). The E-DPDCH carries uplink HSUPA data packets. The E-DPCCH carries transport format combination index (TFCI) information, a retransmission sequence number (RSN) and a happy bit.

The following Tables 1 and 2 summarize the control information sent on the downlink for HSDPA and HSUPA, respectively, and the following Tables 3 and 4 summarize the control information sent on the uplink for HSDPA and HSUPA, respectively.

**Table 1**

| Information (number of bits) | When | Frequency |
|---|---|---|
| **Shared control channel (SCCH)** | | |
| Channelization code (7) | Before data transmission | Per TTI |
| Modulation (1) | Before data transmission | Per TTI |
| Transport block size (6) | Before data transmission | Per TTI |
| H-ARQ process information | Before data transmission | Per TTI |
| (3) | | |
| Redundancy version (3) | Before data transmission | Per TTI |
| New data indicator (1) | Before data transmission | Per TTI |
| UE ID (16) | Before data transmission | Per TTI |

**Table 2**

| Information (number of bits) | When | Frequency |
|---|---|---|
| **Absolute Grant Channel (E-AGCH)** | | |
| Absolute grant - in terms of | After rate request | Depends on the |
| power ratio (5) | | implementation (100's of ms) |
| UE ID or group of UE (16) | After rate request | Same as above |
| H-ARQ process activation | After rate request | Same as above |
| flag | | |

| **Relative Grant Channel (E-RGCH)** | | |
|---|---|---|
| From serving cells | | |
| UP/Hold/Down (1) | Following UL transmission | Per TTI |
| From non-serving cell | | |
| Hold/Down (1) | Following UL transmission | Per TTI (only for 'down' command) |
| UE ID (16) | Following UL transmission | Per TTI (only for 'down' command) |

| **H-ARQ Indicator Channel (E-HICH)** | | |
|---|---|---|
| ACK/NACK (1) | Following UL transmission | Per TTI |

**Table 3**

| Information (number of bits) | When | Frequency |
|---|---|---|
| **Dedicated Control Channel (HS-DPCCH)** | | |
| ACK/NACK (1) | Following DL transmission | Per TTI |
| CQI(5) | Following DL transmission | Periodic (multi TTI or 160 msec as soon as HSDPA channel is est.) |

**Table 4**

| Information (number of bits) | When | Frequency |
|---|---|---|
| **E-DCH Dedicated Control Channel (E-DPCCH)** | | |
| RSN (2) | With UL data transmission | Per TTI |
| Happy bit (1) | With UL data transmission | Per TTI |
| E-TFCI (7) | With UL data transmission | Per TTI |

| **Rate Request Information (on E-DPDCH)** | | |
|---|---|---|
| Logical channel ID (4) | | Periodic and event triggered defined by RRC |
| UE buffer occupancy | | Periodic and event triggered |
| (13) | | defined by RRC |
| UE Power headroom | | Periodic and event triggered |
| (7) | | defined by RRC |

SUMMARY

The present invention is related to a method and system for providing control information for supporting high speed data transmission. A Node-B assigns at least one downlink control channel and at least one uplink control channel to a wireless transmit/receive unit (WTRU). The downlink control channel and the uplink control channel are provided to carry control information for both the downlink and the uplink data transmission. Conventional control channels for HSDPA and HSUPA are combined into a reduced set of control channels for uplink and downlink. The Node-B and the WTRU communicate control information via the reduced set of downlink control and the uplink control channels. The WTRU receives downlink data and transmits uplink data, and the Node-B receives uplink data and transmits downlink data based on the control information transmitted via the reduced set of downlink control and the uplink control channels.

BRIEF DESCRIPTION OF THE DRAWINGS

Figure 1 is a block diagram of a system configured in accordance with the present invention.

Figure 2 is a flow diagram of an exemplary process for transmission of control and data packets in accordance with one embodiment of the present invention.

Figure 3 is a flow diagram of an exemplary process for transmission of control and data packets in accordance with another embodiment the present invention.

DETAILED DESCRIPTION OF THE PREFERRED EMBODIMENTS

When referred to hereafter, the terminology "WTRU" includes but is not limited to a user equipment (UE), a mobile station (STA), a fixed or mobile subscriber unit, a pager, or any other type of device capable of operating in a wireless environment. When referred to hereafter, the terminology "Node-B" includes but is not limited to a base station, e-Node-B, a site controller, an access point (AP) or any other type of interfacing device in a wireless environment.

The features of the present invention may be incorporated into an integrated circuit (IC) or be configured in a circuit comprising a multitude of interconnecting components.

In the current 3GPP specification, there are four downlink control channels and two uplink control channels are defined to support HSDPA and HSUPA operation. In accordance with the present invention, the conventional two uplink control channels are combined to at least one uplink control channel and the conventional four downlink control channels are combined to at least one downlink control channel. In addition to these control channels used for high speed uplink and downlink, information signaled on associated dedicated control channels, (e.g., transmit power control (TPC) on uplink and downlink DPCCHs), may also be combined.

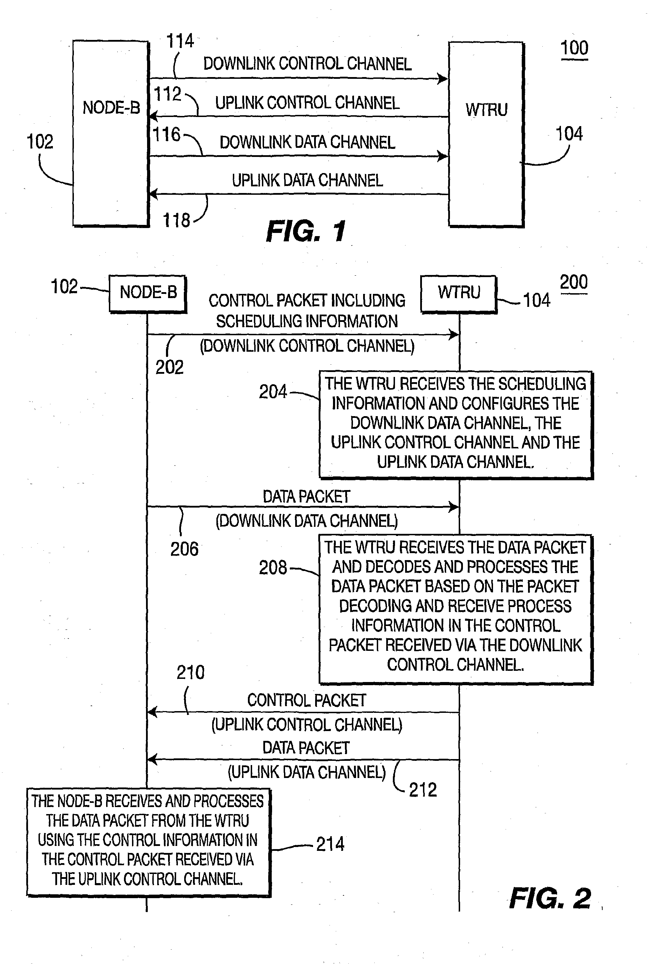

Figure 1 is a block diagram of a wireless communication system 100 configured in accordance with the present invention. The system 100 includes a Node-B 102 and a WTRU 104. Between the Node-B 102 and the WTRU 104, an uplink control channel 112, a downlink control channel 114, a downlink data channel 116 and an uplink data channel 118 are established. The channels 112-118 are allocated to the WTRU 104 preferably by the Node-B 102 or a radio network controller (RNC). The channels 112-118 may be defined by a combination of at least one of frequency, time, power, antenna, and code. A certain antenna and power may be used to transmit to one user and a different set of antenna and power may be used to transmit to another user. Hence, multiple channels may be available at the same time on the same frequency and code using different antenna and power. The Node-B 102 may configure the WTRU 104 to receive and transmit on more than one downlink and uplink control channel and more than one downlink and uplink data channel.

The WTRU 104 listens to the downlink control channel 114 and gets control information about the downlink data channel, the uplink control channel and the uplink data channel. Once the WTRU 104 is configured with the uplink control channel 112 and the downlink data channel 116, the WTRU 104 receives data or transmits control and data information on the assigned downlink data channel 116, the uplink control channel 112 and the uplink data channel 118.

The control information may include scheduling information, packet decoding information, receive process information and feedback information. The packet decoding information, receive process information and feedback information need to be transmitted every transmission time interval (TTI). The scheduling information may be transmitted every TTI or on a need basis.

The packet decoding information may include modulation scheme, a coding rate and a packet size. The information regarding the modulation scheme, the coding rate and the packet size may be combined into one parameter for over the air transmission.

The receive process information may include an H-ARQ process ID, a new data indicator, a redundancy version, a packet sequence number and status information of a transmitter. The H-ARQ process ID is needed only for asynchronous H-ARQ and is not needed for synchronous H-ARQ. The redundancy version may be used to indicate new data as well. The packet sequence number denotes the sequence number of a packet within an H-ARQ process at the transmitter. This is a useful parameter for soft or hard combining of retransmission and a previously failed transmission. The status information may be used for H-ARQ assisted ARQ operation where along with H-ARQ feedback information indicating the status of on-going transmission may be reported.

The feedback information may include H-ARQ ACK/NACK, a CQI of the control channel, a CQI of the data channel, a packet sequence number, an H-ARQ process ID, status information of a receiver, transmit diversity information (phase and amplitude information to support transmit diversity), and power control information.

The scheduling information is either a scheduling request or a scheduling response. The scheduling response is sent from the Node-B 102 to the WTRU 104, and the scheduling request is sent from the WTRU 104 to the Node-B 102. The scheduling response may include at least one of resource allocation for a secondary downlink control channel (if applicable), resource allocation for the downlink data channel 116, resource allocation for the uplink control channel 112, resource allocation for the uplink data channel 118 and uplink timing adjustment if necessary. The secondary downlink control channel is a control channel dedicated to a WTRU 104 for point-to-point services and possibly to several WTRUs in the case of point-to-multipoint services. The WTRU 104 listens to and decodes the channel following a resource allocation indicating the secondary control channel. The WTRU 104 needs frame alignment timing to transmit correctly in an uplink slot. Since a clock of the WTRU 104 drifts with time and the propagation delay changes due to mobility, the WTRU 104 needs to adjust its clock based on the feedback from the Node-B 102. This information is signaled whenever the Node-B 102 detects reception outside of a specified range.

In conventional 3GPP standards, radio resources are assigned per TTI for HSDPA and indefinitely for HSUPA. A duration field may be added to provide flexibility in assigning radio resources so that each resource allocation includes physical resource allocation information and duration indicating a period during which the physical resource allocation is effective. Duration may be a continuous allocation of certain TTIs to the WTRU 104, or a periodic allocation of resources for a certain time. For example, the duration field may be denoted by "n" TTI where "n" may have value from 1 to infinity. The value of '1' indicates the resource is assigned for one TTI and the value of "infinity" denotes infinite allocation of the resource. Where resources are assigned for an infinite period, the WTRU 104 is informed explicitly about release of the resources.

The scheduling response may be sent separately on the downlink control channel 114. Alternatively, the scheduling response may be multiplexed in a signal packet with at least one of the packet decoding information, the receive process information and the feedback information. Alternatively, the scheduling response may be piggybacked with a data packet and sent on the downlink data channel 116.

Alternatively, two separate downlink control channels may be allocated to the WTRU 104, (i.e., a primary downlink control channel and a secondary downlink control channel), and the scheduling response may be transmitted via the primary downlink control channel and the other control information, (i.e., packet decoding information, receive process information, timing adjustment and feedback information), may be transmitted via the secondary downlink control channel. It is preferable to share the primary downlink control channel with multiple WTRUs and dedicate the secondary downlink control channel to a single WTRU for point-to-point services or a set of WTRUs for point-to-multipoint services. The primary downlink control channel is a common control channel that all WTRUs are listening on. The secondary control channel is a dedicated control channel that only certain WTRU(s) addressed on the particular primary control channel listens for.

The scheduling request may contain all or some of the following information such as buffer occupancy for each service type or data flow, related quality of service (QoS) requirements, time in the queue for the first packet for each service, and the WTRU power headroom, (i.e., available power for the requested uplink resource channel), The scheduling request may be transmitted separately on the uplink control channel 112, may be piggybacked with other control information and transmitted on the uplink control channel 112, may be piggybacked with uplink data and transmitted on the uplink data channel 118, may be sent via a separate packet on the uplink data channel 118, or may be sent via a random access channel (RACH) (not shown in Figure 1). Preferably, during active transmission, (i.e., the uplink control channel 112 is present), the scheduling request is sent on the uplink control channel 112 piggybacked with the other control information. In the absence of the uplink control channel 112, the scheduling request is preferably sent on the RACH.

For transmitting control information on the uplink control channel 112 and the downlink control channel 114, the control information may be separated in two parts since not all the control information needs to be sent at any given TTI. The control information may contain special bits to indicate whether the control channel contains only downlink control information or only uplink control information and whether the control channel contains feedback information or other control information. The special bits may also indicate whether the control channel includes broadcast information, multimedia broadcast/multicast services (MBMS), persistent scheduling information for periodic services, paging information or control information for group of WTRUs.

Uplink control information from the Node-B 102 to the WTRU 104 may contain transmission feedback information. Downlink control information from the WTRU 104 to the Node-B 102 only contains feedback information. Uplink control information from the WTRU 104 to the Node-B 102 contains packet decoding information, receive process information and a scheduling request (if needed). Downlink control information from the Node-B 102 to the WTRU 104 contains decoding information, receive process information and a schedule response (if needed).

In a preferred embodiment, a single packet may be used including all control information. Alternatively, multiple packets may be used. A single packet contains all the downlink control information and the uplink control information needed for both downlink and uplink. The control packet contains decoding information, receive process information, feedback information and scheduling information, (i.e., a scheduling request or a scheduling response). Some indication may be included in the control packet to indicate active information elements.

The downlink control channel 114 and the uplink control channel 112 may be a shared channel for all WTRUs or a dedicated channel assigned to a single WTRU or a group of WTRUs. Preferably, the uplink control channel 112 is not a shared channel due to possible collisions between multiple WTRUs.

The uplink control channel 112 may be assigned to a WTRU 104 only during active uplink and/or downlink data transfer, (i.e., on an as needed basis). Alternatively, the uplink control channel 112 may be assigned to a WTRU 104 even in a dormant state. Four alternatives with respect to downlink and uplink control channel configuration are summarized in Table 5. Method 3 and 4 are the preferred alternatives.

**Table 5**

| | Downlink control channel | Uplink control channel |
|---|---|---|
| Method 1 | Dedicated | Dedicated during dormant and active state |
| Method 2 | Dedicated | Dedicated only during active state |
| Method 3 | Shared | Dedicated during dormant and active state |
| Method 4 | Shared | Dedicated only during active state |

An exemplary system operation with a single downlink control channel and per TTI basis resource allocation is explained hereinafter with reference to Figure 2. Figure 2 is a flow diagram of an exemplary process 200 for transmission of control and data packets in accordance with one embodiment of the present invention. The WTRUs are listening to the downlink control channel 114 (step 202). Once the WTRUs 104 get the control information addressed to it on the downlink control channel 114 from a Node-B 102, the WTRUs 114 get scheduling information, (e.g., resource allocation for a downlink data channel, an uplink control channel and an uplink data channel), and packet decoding and receive process information, (e.g., a coding rate, a modulation scheme, a packet size, an H-ARQ process ID, a redundancy version, or the like). The control packet may also include feedback information, (i.e., H-ARQ ACK/NACK of the previous uplink data packet and a CQI). The WTRU 104 receives the scheduling information and configured the downlink data channel 116, the uplink control channel 112 and the uplink data channel 118 (step 204).

The None-B 102 transmits a downlink data packet to the WTRU 104 via the downlink data channel 116 (step 206). The WTRU 104 receives the downlink data packet on the downlink data channel 116 and decodes and processes the data packet based on the packet decoding and receive process information received in the control packet via the downlink control channel 114 (step 208).

The WTRU 104 responds with a control packet that contains feedback information to the downlink data packet, (i.e., ACK/NACK) (step 210). If needed, the WTRU 104 may also send a scheduling request for uplink transmission and packet decoding and receive process information, (i.e., a coding rate, a modulation scheme, a packet size, an H-ARQ process ID, a redundancy version, or the like), and may subsequently send an uplink data packet (steps 210, 212). The Node-B 102 receives and processes the uplink data packet from the WTRU 104 using the control information in the control packet received via the uplink control channel (step 214).

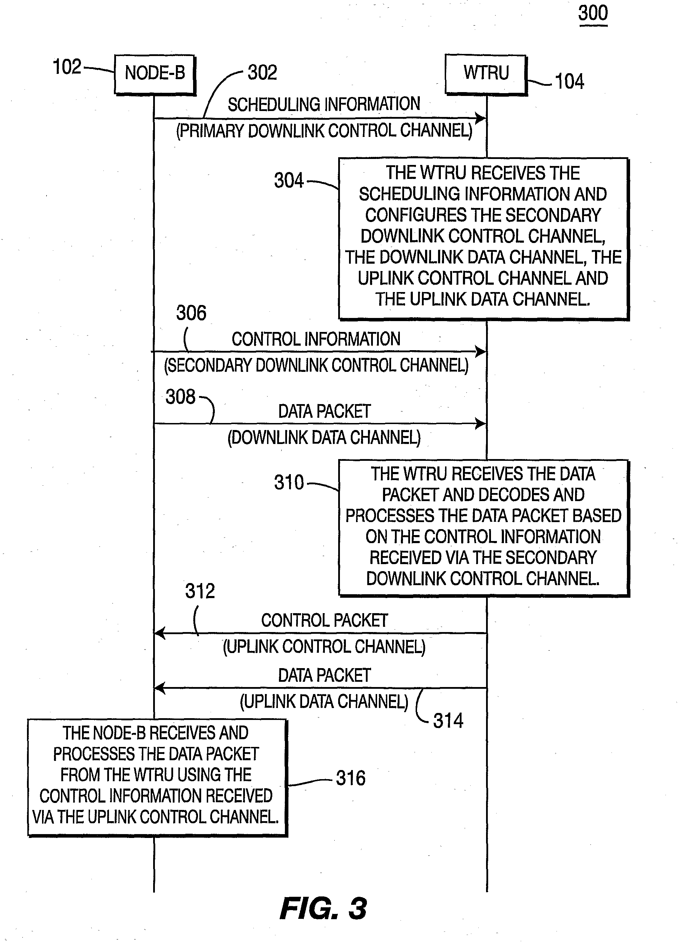

An exemplary system operation with primary and secondary downlink control channels and duration-based resource allocation is explained herein after with reference to Figure 3. Figure 3 is a flow diagram of an exemplary process 300 for transmission of control and data packets in accordance with another embodiment of the present invention. Two downlink control channels, (i.e., a primary downlink control channel and a secondary downlink control channel),. The primary control channel, (may also be called a common control channel), is known to and monitored by each WTRU 104. Each WTRU 104 receives control information on the primary channel addressed to it from the Node-B 102, The Node-B 102 sends scheduling information on the primary downlink control channel (step 302). The scheduling information includes resource assignment for a secondary downlink control channel, a downlink data channel, an uplink control channel and an uplink data channel. The secondary downlink control channel is the dedicated control channel addressed to the WTRU 104. Upon receiving the scheduling information, the WTRU 104 configures the secondary downlink control channel, the downlink data channel, the uplink control channel and the uplink data channel (step 304).

The Node-B 102 sends control information, (i.e., packet related information, such as a coding rate, a modulation scheme, a packet size, an H-ARQ process ID, a redundancy version, or the like), on the secondary downlink control channel (step 306). The Node-B 102 may send feedback information, (i.e., ACK/NACK of the previous uplink data packet and a CQI), on the secondary downlink control channel. The Node-B 102 then sends a data packet to the WTRU 104 via the downlink data channel (step 308). The WTRU 104 decodes and processes the data packet based on the control information received on the secondary downlink control channel (step 310). The WTRU 104 sends a control packet that contains feedback information to the data packet, (i.e., ACK/NACK), via the uplink control channel (step 312). If needed, the WTRU 104 may send a scheduling request for uplink transmissions and packet related information along with the feedback via the uplink control channel. The WTRU 104 then may send an uplink data packet via the uplink data channel (step 314). The Node-B 102 receives, decodes and processes the uplink data packet based on the control information received via the uplink control channel (step 316). If the primary control channel allocates a secondary control and data transmission channel for a specified duration the WTRU 104 either continuously, (i.e., each TTI), or periodically, (i.e., in accordance with a reception pattern over multiple TTIs), receive the allocated channels for the duration of the allocation.

An H-ARQ control packet for an active H-ARQ process may be sent on an as needed basis. If the H-ARQ information, (such as an H-ARQ process ID, a new data indicator and a redundancy version), is included in a subsequent packet, (e.g., in a header of a subsequent data packet), there is no need to send the scheduling information every TTI. A downlink control packet for scheduling information will be sent only if there is a change in resource allocation, a modulation scheme or a packet size.

The control information may be piggybacked on a data packet. Control information, (such as, ACK/NACK, a CQI, a scheduling response, or a scheduling request), may be piggybacked with data in a data packet. This is especially useful when both uplink and downlink H-ARQ processes are active. A downlink data packet may piggyback ACK/NACK, a CQI and a scheduling response. An uplink data packet may piggyback ACK/NACK, a CQI and a scheduling request.

Alternatively, two uplink control channels may be provided, (i.e., a primary uplink control channel and a secondary uplink control channel). The primary uplink control channel is used to send a resource request and the secondary control channel is used to send packet decoding and receive process information and feedback information.

Downlink resource allocation may implicitly imply uplink resource allocation. For example, when the WTRU 104 is assigned with resources in the downlink for HSDPA, it may implicitly mean that specific resources are assigned in uplink for data and/or control transmission, (such as, ACK/NACK, small data packets, and a scheduling request for uplink transmission). The uplink data channel and the uplink control channel may have a fixed offset in time or frequency from the downlink data channel or the downlink control channel, and the WTRU 104 may configure the uplink channels based on the fixed offset.

The Node-B 102 may make the decision regarding a transmit power, a packet size, a modulation scheme, a coding rate, and an H-ARQ process for uplink transmissions. In this case, the control information for uplink data packet is sent from the Node-B 102 to the WTRU 104 via the downlink control channel.

The WTRU 104 is required to monitor downlink control channel. If it is a time division multiplexing (TDM) system, the WTRU 104 may go to sleep during time slots that are not assigned to the WTRU 104 and may wake up to listen to the control channel on the assigned time slot(s).

Embodiments.

1. A method for providing control information for supporting a high speed downlink and uplink in a wireless communication system including a WTRU and a Node-B.

2. The method of embodiment 1 comprising the step of the Node-B assigning at least one downlink control channel to the WTRU to carry downlink control information for both the downlink and the uplink transmissions.

3. The method as in any of the embodiments 1-2, comprising the step of the Node-B assigning at least one uplink control channel to the WTRU to carry uplink control information for both the downlink and the uplink transmissions.

4. The method of embodiment 3, comprising the step of the Node-B and the WTRU communicating downlink and uplink control information via the downlink control channel and the uplink control channel, respectively.

5. The method of embodiment 4, comprising the step of the WTRU receiving downlink data based on the downlink control information.

6. The method as in any of the embodiments 4-5, comprising the step of the WTRU transmitting uplink data based on the uplink control information.

7. The method as in any of the embodiments 4-6, comprising the step of the Node-B receiving uplink data based on the uplink control information.

8. The method as in any of the embodiments 4-7, comprising the step of the Node-B transmitting downlink data based on the downlink control information.

9. The method as in any of the embodiments 4-8, wherein the downlink control information and the uplink control information includes at least one of packet decoding information, receive process information and feedback information.

10. The method as in any of the embodiments 4-9, wherein the downlink control information and the uplink control information includes scheduling information.

11. The method of embodiment 10, wherein the scheduling information includes scheduling request information and scheduling response information.

12. The method as in any of the embodiments 10-11, wherein the scheduling information is multiplexed with at least one of the packet decoding information, the receive process information and the feedback information.

13. The method as in any of the embodiments 2-12, wherein the downlink control channel includes a primary downlink control channel and a secondary downlink control channel.

14. The method of embodiment 13, wherein the primary downlink control channel is a shared control channel by all WTRUs and the secondary control channel is a dedicated control channel for at least one WTRU.

15. The method as in any of the embodiments 13-14, wherein the scheduling information is transmitted via the primary downlink control channel and the packet decoding information, the receive process information and the feedback information are transmitted via the secondary downlink control channel.

16. The method as in any of the embodiments 9-15, wherein at least one of the packet decoding information, the receive process information, the feedback information and the scheduling information is piggybacked on a data packet.

17. The method as in any of the embodiments 10-16, wherein the scheduling information is provided every TTI
.

18. The method as in any of the embodiments 10-17, wherein the scheduling information is provided on a need basis.

19. The method as in any of the embodiments 10-18, wherein the scheduling information includes resource allocation and duration, the duration indicating a period during which the resource allocation is effective.

20. The method as in any of the embodiments 10-19, wherein scheduling information sent by the Node-B to the WTRU includes at least one of resource allocation for a downlink data channel, resource allocation for an uplink data channel, resource allocation for an uplink control channel and timing adjustment information.

21. The method of embodiment 20, wherein the timing adjustment information is transmitted via a separate packet.

22. The method as in any of the embodiments 9-21, wherein the packet decoding information includes at last one of a modulation scheme, a coding rate and a packet size.

23. The method as in any of the embodiments 9-22, wherein the receive process information includes at last one of a H-ARQ process identity, a new data indication, a redundancy version, a packet sequence number, and status information.

24. The method as in any of the embodiments 9-23, wherein the feedback information includes at last one of an ACK/NACK indication, a CQI, a packet sequence number, a H-ARQ process identity, status information, a transmit diversity information and power control information.

25. The method as in any of the embodiments 3-24, wherein the downlink control information and the uplink control information are sent separately in separate control channels.

26. The method as in any of the embodiments 3-24, wherein the downlink control information and the uplink control information are sent via a single control channel at the same time.

27. The method as in any of the embodiments 3-26, wherein the downlink control channel is assigned to the WTRU only when there is an active data transfer for the downlink and the uplink control channel is assigned to the WTRU only when there is an active data transfer for the uplink.

28. The method as in any of the embodiments 3-26, wherein the downlink control channel is assigned to the WTRU even though there is no active data transfer for the downlink and the uplink control channel assigned to the WTRU even though there is no active data transfer for the uplink.

29. The method as in any of the embodiments 3-28, wherein at least one of the downlink control channel and the uplink control channel is a shared channel.

30. The method as in any of the embodiments 3-28, wherein at least one of the downlink control channel and the uplink control channel is a dedicated channel.

31. The method as in any of the embodiments 11-30, wherein the scheduling response information sent by the Node-B includes resource allocation for uplink transmission.

32. The method as in any of the embodiments 1-31, wherein the wireless communication system is a TDD system.

33. The method of embodiment 32, wherein the WTRU goes to sleep during a time slot that is not assigned to the WTRU.

34. The method as in any of the embodiments 10-33, wherein the scheduling information sent by the Node-B to the WTRU includes downlink resource allocation, and uplink resource allocation is implicitly derived from the downlink resource allocation.

35. The method as in any of the embodiments 3-34, wherein the uplink control channel includes a primary uplink control channel and a secondary uplink control channel.

36. The method of embodiment 35, wherein the scheduling information is transmitted via the primary uplink control channel and the packet decoding information, the receive process information and the feedback information are transmitted via the secondary uplink control channel.

37. The method as in any of the embodiments 2-36, wherein the downlink control channel includes indication bits to identify the type of control information.

38. The method of embodiment 37, wherein the indication bits identify that the downlink control channel contains only downlink control information.

39. The method of embodiment 37 wherein the indication bits identify that the downlink control channel contains only uplink control information.

40. The method of embodiment 37 wherein the indication bits identify that the downlink control channel contains broadcast information.

41. The method of embodiment 37 wherein the indication bits identify that the downlink control channel contains MBMS control information.

42. The method of embodiment 37 wherein the indication bits identify that the control channel contains persistent scheduling information.

43. The method of embodiment 37 wherein the indication bits identify that the control channel contains paging information.

44. A wireless communication system for providing control information for supporting a high speed downlink and a high speed uplink.

45. The system of embodiment 44, comprising a Node-B configured to assign at least one downlink control channel to a WTRU.

46. The system of embodiment 45, wherein the downlink control channel is provided to carry downlink control information for both the downlink and the uplink

47. The system as in any of the embodiments 44-46, wherein the Node-B assigns at least one uplink control channel to the WTRU.

48. The system of embodiment 47 wherein the uplink control channel is provided to carry uplink control information for both the downlink and the uplink.

49. The system as in any of the embodiments 47-48, wherein the Node-B sends downlink control information to the WTRU via the downlink control channel, and perform at least one of receiving uplink data and transmitting downlink data based on the uplink control information and the downlink control information, respectively.

50. The system as in any of the embodiments 47-49, wherein the WTRU is configured to send uplink control information to the Node-B via the uplink control channel and perform at least one of receiving downlink data and transmitting uplink data based on the downlink control information and the uplink control information, respectively.

51. The system as in any of the embodiments 46-50, wherein the control information includes at least one of packet decoding information, receive process information and feedback information.

52. The system as in any of the embodiments 46-51, wherein the control information includes scheduling information.

53. The system of embodiment 52, wherein the scheduling information includes scheduling request information and scheduling response information.

54. The system as in any of the embodiments 52-53, wherein the scheduling information is multiplexed with at least one of the packet decoding information, the receive process information and the feedback information.

55. The system as in any of the embodiments 45-54, wherein the downlink control channel includes a primary downlink control channel and a secondary downlink, control channel.

56. The system of embodiment 55, wherein the primary downlink control channel is a shared control channel by all WTRUs and the secondary control channel is a dedicated control channel for at least one WTRU.

57. The system as in any of the embodiments 55-56, wherein the scheduling information is transmitted via the primary downlink control channel and the packet decoding information, the receive process information and the feedback information are transmitted via the secondary downlink control channel.

58. The system as in any of the embodiments 51-57, wherein at least one of the packet decoding information, the receive process information, the feedback information and the scheduling information is piggybacked on a data packet.

59. The system as in any of the embodiments 52-58, wherein the scheduling information is provided every TTI.

60. The system as in any of the embodiments 52-58, wherein the scheduling information is provided on a need basis.

61. The system as in any of the embodiments 52-60, wherein the scheduling information includes resource allocation and duration, the duration indicating a period during which the resource allocation is effective.

62. The system as in any of the embodiments 53-61, wherein the scheduling response information sent by the Node-B to the WTRU includes at least one of resource allocation for a downlink data channel, resource allocation for an uplink data channel, resource allocation for an uplink control channel and timing adjustment information.

63. The system of embodiment 62, wherein the timing adjustment information is transmitted via a separate packet.

64. The system as in any of the embodiments 51-63, wherein the packet decoding information includes at last one of a modulation scheme, a coding rate and a packet size.

65. The system as in any of the embodiments 51-64, wherein the receive process information includes at last one of a H-ARQ process identity, a new data indication, a redundancy version, a packet sequence number, and status information.

66. The system as in any of the embodiments 51-65, wherein the feedback information includes at last one of an ACK/NACK indication, a CQI, a packet sequence number, a H-ARQ process identity, status information, a transmit diversity information and power control information.

67. The system as in any of the embodiments 47-66, wherein the downlink control information and the uplink control information are sent separately over separate control channels.

68. The system as in any of the embodiments 47-66, wherein the downlink control information and the uplink control information are sent via a single control channel at the same time.

69. The system as in any of the embodiments 47-68, wherein the downlink control channel is assigned to the WTRU only when there is an active data transfer for the downlink, and the uplink control channel is assigned to the WTRU only when there is an active data transfer for the uplink.

70. The system as in any of the embodiments 47-68, wherein the downlink control channel is assigned to the WTRU even though there is no active data transfer for the downlink and the uplink control channel is assigned to the WTRU even though there is no active data transfer for the uplink.

71. The system as in any of the embodiments 47-70, wherein at least one of the downlink control channel and the uplink control channel is a shared channel.

72. The system as in any of the embodiments 47-70, wherein at least one of the downlink control channel and the uplink control channel is a dedicated channel.

73. The system as in any of the embodiments 53-72, wherein the scheduling response information sent by the Node-B includes resource allocation for uplink transmission.

74. The system as in any of the embodiments 44-73, wherein the wireless communication system is a TDD system.

75. The system of embodiment 74, wherein the WTRU goes to sleep during a time slot that is not assigned to the WTRU.

76. The system as in any of the embodiments 52-75, wherein the scheduling information sent by the Node-B to the WTRU includes downlink resource allocation, and uplink resource allocation is implicitly derived from the downlink resource allocation.

77. The system as in any of the embodiments 47-76, wherein the uplink control channel includes a primary uplink control channel and a secondary uplink control channel.

78. The system of embodiment 77, wherein the scheduling information is transmitted via the primary uplink control channel and the packet decoding information, the receive process information and the feedback information are transmitted via the secondary uplink control channel.

79. The system as in any of the embodiments 45-78, wherein the downlink control channel has indication bits to identify the type of control information.

80. The system of embodiment 79, wherein the indication bits identify that the downlink control channel contains only downlink control information.

81. The system of embodiment 79, wherein the indication bits identify that the downlink control channel contains only uplink control information.

82. The system of embodiment 79, wherein the indication bits identify that the downlink control channel contains broadcast information.

83. The system of embodiment 79, wherein the indication bits identify that the downlink control channel contains multimedia broadcast/multicast services (MBMS) control information.

84. The system of embodiment 79, wherein the indication bits identify that the control channel contains persistent scheduling information.

85. The system of embodiment 79, wherein the indication bits identify that the control channel contains paging information.
86. In a wireless communication system including a wireless transmit/receive unit (WTRU) and a Node-B, a method for providing control information for supporting a high speed downlink and uplink, the method comprising:
   the Node-B assigning at least one downlink control channel to the WTRU to carry downlink control information for both the downlink and the uplink transmissions;
   the Node-B assigning at least one uplink control channel to the WTRU to carry uplink control information for both the downlink and the uplink transmissions;
   the Node-B and the WTRU communicating downlink and uplink control information via the downlink control channel and the uplink control channel, respectively; and
   the WTRU performing at least one of receiving downlink data and transmitting uplink data based on the downlink control information and the uplink control information, respectively, and the Node-B performing at least one of receiving uplink data and transmitting downlink data based on the uplink control information and the downlink control information, respectively.
87. The method of embodiment 86 wherein the downlink control information and the uplink control information includes at least one of packet decoding information, receive process information and feedback information.
88. The method of embodiment 87 wherein the downlink control information and the uplink control information further includes scheduling information.
89. The method of embodiment 88 wherein the scheduling information includes scheduling request information and scheduling response information.
90. The method of embodiment 88 wherein the scheduling information is multiplexed with at least one of the packet decoding information, the receive process information and the feedback information.
91. The method of embodiment 88 wherein the downlink control channel includes a primary downlink control channel and a secondary downlink control channel.
92. The method of embodiment 91 wherein the primary downlink control channel is a shared control channel by all WTRUs and the secondary control channel is a dedicated control channel for at least one WTRU.
93. The method of embodiment 91 wherein the scheduling information is transmitted via the primary downlink control channel and the packet decoding information, the receive process information and the feedback information are transmitted via the secondary downlink control channel.
94. The method of embodiment 88 wherein at least one of the packet decoding information, the receive process information, the feedback information and the scheduling information is piggybacked on a data packet.
95. The method of embodiment 88 wherein the scheduling information is provided every transmission time interval (TTI).
96. The method of embodiment 88 wherein the scheduling information is provided on a need basis.
97. The method of embodiment 88 wherein the scheduling information includes resource allocation and duration, the duration indicating a period during which the resource allocation is effective.
98. The method of embodiment 89 wherein scheduling information sent by the Node-B to the WTRU includes at least one of resource allocation for a downlink data channel, resource allocation for an uplink data channel, resource allocation for an uplink control channel and timing adjustment information.
99. The method of embodiment 98 wherein the timing adjustment information is transmitted via a separate packet.
100. The method of embodiment 87 wherein the packet decoding information includes at least one of a modulation scheme, a coding rate and a packet size.
101. The method of embodiment 87 wherein the receive process information includes at least one of a hybrid automatic repeat request (H-ARQ) process identity, a new data indication, a redundancy version, a packet sequence number, and status information.
102. The method of embodiment 87 wherein the feedback information includes at least one of an acknowledgement (ACK)/non-acknowledgement (NACK) indication, a channel quality indicator (CQI), a packet sequence number, a hybrid automatic repeat request (H-ARQ) process identity, status information, a transmit diversity information and power control information.
103. The method of embodiment 86 wherein the downlink control information and the uplink control information are sent separately in separate control channels.
104. The method of embodiment 86 wherein the downlink control information and the uplink control information are sent via a single control channel at the same time.
105. The method of embodiment 86 wherein the downlink control channel is assigned to the WTRU only when there is an active data transfer for the downlink and the uplink control channel is assigned to the WTRU only when there is an active data transfer for the uplink.
106. The method of embodiment 86 wherein the downlink control channel is assigned to the WTRU even though there is no active data transfer for the downlink and the uplink control channel assigned to the WTRU even though there is no active data transfer for the uplink.
107. The method of embodiment 86 wherein at least one of the downlink control channel and the uplink control channel is a shared channel.
108. The method of embodiment 86 wherein at least one of the downlink control channel and the uplink control channel is a dedicated channel.
109. The method of embodiment 89 wherein the scheduling response information sent by the Node-B includes resource allocation for uplink transmission.
110. The method of embodiment 86 wherein the wireless communication system is a time division duplex (TDD) system.
111. The method of embodiment 110 wherein the WTRU goes to sleep during a time slot that is not assigned to the WTRU.
112. The method of embodiment 88 wherein the scheduling information sent by the Node-B to the WTRU includes downlink resource allocation, and uplink resource allocation is implicitly derived from the downlink resource allocation.
113. The method of embodiment 88 wherein the uplink control channel includes a primary uplink control channel and a secondary uplink control channel.
114. The method of embodiment 113 wherein the scheduling information is transmitted via the primary uplink control channel and the packet decoding information, the receive process information and the feedback information are transmitted via the secondary uplink control channel.
115. The method of embodiment 86 wherein the downlink control channel includes indication bits to identify the type of control information.
116. The method of embodiment 115 wherein the indication bits identify that the downlink control channel contains only downlink control information.
117. The method of embodiment 115 wherein the indication bits identify that the downlink control channel contains only uplink control information.
118. The method of embodiment 115 wherein the indication bits identify that the downlink control channel contains broadcast information.
119. The method of embodiment 115 wherein the indication bits identify that the downlink control channel contains multimedia broadcast/multicast services (MBMS) control information.
120. The method of embodiment 115 wherein the indication bits identify that the control channel contains persistent scheduling information.
121. The method of embodiment 115 wherein the indication bits identify that the control channel contains paging information.
122. A wireless communication system for providing control information for supporting a high speed downlink and a high speed uplink, the system comprising:
   a Node-B configured to assign at least one downlink control channel and at least one uplink control channel to a wireless transmit/receive unit (WTRU), the downlink control channel being provided to carry downlink control information for both the downlink and the uplink and the uplink control channel being provided to carry uplink control information for both the downlink and the uplink, send downlink control information to the WTRU via the downlink control channel, and perform at least one of receiving uplink data and transmitting downlink data based on the uplink control information and the downlink control information, respectively; and
   the WTRU configured to send uplink control information to the Node-B via the uplink control channel and perform at least one of receiving downlink data and transmitting uplink data based on the downlink control information and the uplink control information, respectively.
123. The system of embodiment 122 wherein the control information includes at least one of packet decoding information, receive process information and feedback information.
124. The system of embodiment 123 wherein the control information includes scheduling information.
125. The system of embodiment 124 wherein the scheduling information includes scheduling request information and scheduling response information.
126. The system of embodiment 124 wherein the scheduling information is multiplexed with at least one of the packet decoding information, the receive process information and the feedback information.
127. The system of embodiment 124 wherein the downlink control channel includes a primary downlink control channel and a secondary downlink control channel.
128. The system of embodiment 127 wherein the primary downlink control channel is a shared control channel by all WTRUs and the secondary control channel is a dedicated control channel for at least one WTRU.
129. The system of embodiment 128 wherein the scheduling information is transmitted via the primary downlink control channel and the packet decoding information, the receive process information and the feedback information are transmitted via the secondary downlink control channel.
130. The system of embodiment 124 wherein at least one of the packet decoding information, the receive process information, the feedback information and the scheduling information is piggybacked on a data packet.
131. The system of embodiment 124 wherein the scheduling information is provided every transmission time interval (TTI).
132. The system of embodiment 124 wherein the scheduling information is provided on a need basis.
133. The system of embodiment 124 wherein the scheduling information includes resource allocation and duration, the duration indicating a period during which the resource allocation is effective.
134. The system of embodiment 124 wherein the scheduling response information sent by the Node-B to the WTRU includes at least one of resource allocation for a downlink data channel, resource allocation for an uplink data channel, resource allocation for an uplink control channel and timing adjustment information.
135. The system of embodiment 134 wherein the timing adjustment information is transmitted via a separate packet.
136. The system of embodiment 122 wherein the packet decoding information includes at least one of a modulation scheme, a coding rate and a packet size.
137. The system of embodiment 122 wherein the receive process information includes at least one of a hybrid automatic repeat request (H-ARQ) process identity, a new data indication, a redundancy version, a packet sequence number, and status information.
138. The system of embodiment 122 wherein the feedback information includes at least one of an acknowledgement (ACK)/non-acknowledgement (NACK) indication, a channel quality indicator (CQI), a packet sequence number, a hybrid automatic repeat request (H-ARQ) process identity, status information, a transmit diversity information and power control information.
139. The system of embodiment 122 wherein the downlink control information and the uplink control information are sent separately over separate control channels.
140. The system of embodiment 122 wherein the downlink control information and the uplink control information are sent via a single control channel at the same time.
141. The system of embodiment 122 wherein the downlink control channel is assigned to the WTRU only when there is an active data transfer for the downlink, and the uplink control channel is assigned to the WTRU only when there is an active data transfer for the uplink.
142. The system of embodiment 122 wherein the downlink control channel is assigned to the WTRU even though there is no active data transfer for the downlink and the uplink control channel is assigned to the WTRU even though there is no active data transfer for the uplink.
143. The system of embodiment 122 wherein at least one of the downlink control channel and the uplink control channel is a shared channel.
144. The system of embodiment 122 wherein at least one of the downlink control channel and the uplink control channel is a dedicated channel.
145. The system of embodiment 124 wherein the scheduling response information sent by the Node-B includes resource allocation for uplink transmission.
146. The system of embodiment 122 wherein the wireless communication system is a time division duplex (TDD) system.
147. The system of embodiment 146 wherein the WTRU goes to sleep during a time slot that is not assigned to the WTRU.
148. The system of embodiment 124 wherein the scheduling information sent by the Node-B to the WTRU includes downlink resource allocation, and uplink resource allocation is implicitly derived from the downlink resource allocation.
149. The system of embodiment 124 wherein the uplink control channel includes a primary uplink control channel and a secondary uplink control channel.
150. The system of embodiment 149 wherein the scheduling information is transmitted via the primary uplink control channel and the packet decoding information, the receive process information and the feedback information are transmitted via the secondary uplink control channel.
151. The system of embodiment 122 wherein the downlink control channel has indication bits to identify the type of control information.
152. The system of embodiment 151 wherein the indication bits identify that the downlink control channel contains only downlink control information.
153. The system of embodiment 151 wherein the indication bits identify that the downlink control channel contains only uplink control information.
154. The system of embodiment 151 wherein the indication bits identify that the downlink control channel contains broadcast information.
155. The system of embodiment 151 wherein the indication bits identify that the downlink control channel contains multimedia broadcast/multicast services (MBMS) control information.
156. The system of embodiment 151 wherein the indication bits identify that the control channel contains persistent scheduling information.
157. The system of embodiment 151 wherein the indication bits identify that the control channel contains paging information.

Although the features and elements of the present invention are described in the preferred embodiments in particular combinations, each feature or element can be used alone without the other features and elements of the preferred embodiments or in various combinations with or without other features and elements of the present invention.

## Claims

1. A method implemented by a wireless transmit/receive unit (WTRU), the method comprising:
receiving a plurality of control information elements in a downlink control channel during a plurality of transmission time intervals (TTIs), at least one of the control information elements including downlink resource assignment information and downlink modulation and coding scheme information, and at least one of the control information elements including uplink resource assignment information;
processing a downlink shared channel based on the downlink resource assignment information and the downlink modulation and coding scheme information; and
processing and transmitting an uplink channel based on the uplink resource assignment information.

2. The method of claim 1 wherein at least one of the control information elements includes downlink redundancy version information.

3. The method of claim 1 wherein at least one of the control information elements includes downlink new data indicator information.

4. A wireless transmit/receive unit (WTRU) comprising:
circuitry configured to receive a plurality of control information elements in a downlink control channel during a plurality of transmission time intervals (TTIs), at least one of the control information elements including downlink resource assignment information and downlink modulation and coding scheme information, and at least one of the control information elements including uplink resource assignment information;
wherein the circuitry is further configured to process a downlink shared channel based on the downlink resource assignment information and the downlink modulation and coding scheme information; and
wherein the circuitry is further configured to process and transmit an uplink channel based on the uplink resource assignment information.

5. The WTRU of claim 4 wherein at least one of the control information elements includes downlink redundancy version information.

6. The WTRU of claim 4 wherein at least one of the control information elements includes downlink new data indicator information.

7. An infrastructure node comprising:
circuitry configured to produce and transmit a plurality of control information elements for a downlink control channel during a plurality of transmission time intervals (TTIs), at least one of the control information elements including downlink resource assignment information and downlink modulation and coding scheme information for a wireless transmit/receive unit (WTRU), and at least one of the control information elements including uplink resource assignment information for the WTRU;
wherein the circuitry is further configured to transmit a downlink shared channel to the WTRU in accordance with the downlink resource assignment information and the downlink modulation and coding scheme information; and
wherein the circuitry is further configured to receive an uplink channel from the WTRU in response to the uplink resource assignment information.

8. The infrastructure node of claim 7 wherein at least one of the control information elements includes downlink redundancy version information.

9. The infrastructure node of claim 7 wherein at least one of the control information elements includes downlink new data indicator information.
